Europäisches Patentamt

European Patent Office

Office européen des brevets

(11) Publication number: **0 067 492**
**B1**

(12) **EUROPEAN PATENT SPECIFICATION**

(45) Date of publication of patent specification: **26.03.86**

(21) Application number: **82200738.1**

(22) Date of filing: **15.06.82**

(51) Int. Cl.⁴: **A 01 G 1/04**, A 01 G 31/02

(54) Method of cultivating crop.

(30) Priority: **16.06.81 NL 8102876**

(43) Date of publication of application:
**22.12.82 Bulletin 82/51**

(45) Publication of the grant of the patent:
**26.03.86 Bulletin 86/13**

(84) Designated Contracting States:
**AT BE CH DE FR GB IT LI LU NL SE**

(56) References cited:
**DE-C- 246 595**

(73) Proprietor: **Schulte & Lestraden B.V.**
**Parklaan 156**
**NL-2171 EK Sassenheim (NL)**

(72) Inventor: **Lestraden, Jacobus Wilhelmus**
**Nachtegaallaan 4**
**NL-2172 JR Sassenheim (NL)**

(74) Representative: **Noz, Franciscus Xaverius, Ir.**
**et al**
**Boschdijk 155 P.O. Box 645**
**NL-5600 AP Eindhoven (NL)**

Courier Press, Leamington Spa, England.

## Description

The invention relates to a method of cultivating crops in air pervious beds comprising arranging culture material in air pervious beds one above the other and screening the space between two superjacent beds.

Some crops, for example mushrooms are grown in closed spaces in trays or beds arranged one above the other. In order to maintain optimum growth simulating conditions it is often desirable to carry out air refreshment or the like at given intervals. It has hitherto been common practice to flush the whole room containing the beds with air. This requires the passing of a comparatively large quantity of air, which involves loss of eenergy, whilst in many cases the requirements of optimum air refreshment or the like are not fully satisified. Further from DE—C—246595 there is known a method whereby each air pervious bed is arranged in a closed space to which gas can be supplied or from which gas can be discharged. However thereby there will not be passed gas through the bed.

Now according to the invention air or other gas is passed through the material and bases of the beds from or to the ambient atmosphere into or out of the said space by subjecting said space to a sub- or superatmospheric pressure.

By using this method the pressure prevailing in the space between the beds can be maintained at the desired value for a desired period of time so that, for example, by using superatmospheric pressure in said space the cultures in the beds can be satisfactorily flushed with air or another desired gas, whereas by producing a subatmospheric pressure in said space gas or the like occurring in the culture can be effectively sucked away.

Particularly in mushroom cultures, for example, $CO_2$ is produced in the growing material at a given instant; this gas tends to stay in a layer at the top side of the beds. However, a satisfactory fructification and growth of mushrooms require the removal of this carbon dioxide. If subatmospheric pressure is generated in the space between the superjacent beds, the $CO_2$ will be effectively sucked away from the entire surfaces of the beds. In practice it has been found that as a result quite uniform fructification occurs throughout the bed surfaces so that the mushrooms will substantially all be ripe at the same time for being harvested, which is particularly important for a mechanical harvesting process. In the flushing methods hitherto employed for the rooms containing the cultivating beds such an effective and uniform evacuation of $CO_2$ cannot be achieved so that non-uniform pin heading and growth of the mushrooms occur, whilst flushing the whole space requires a considerably higher amount of energy than is necessary for evacuating $CO_2$ by the method embodying the invention.

According to a further aspect the invention relates to a cultivation room particularly designed for applying the method described above, said room being provided with racks for supporting cultivation beds, the racks comprising horizontal members supported by hollow uprights having orifices opening into spaces between the beams the spaces being screened by partitions and wherein the hollow uprights are connected to means for producing sub- or superatmospheric pressure in said spaces. The cultivation room shown in the above cited DE—C—246595 comprises a plurality of spaces separated from each other by closed horizontal walls.

According to the invention the horizontal members are in the form of elongate beams on which in use, the cultivation beds directly rest so that air or gas can pass through the cultivation material and base of the cultivation beds from or to the ambient atmosphere into or out of the said space under the influence of the pressure means.

By correctly arranging the orifices between the superjacent cultivation beds supported by the elongate beams the pressure prevailing in the spaces between the beds can be effectively controlled, whilst the construction of the cultivation room is simple, which is also important in cleaning the cultivation room after the removal of the beds.

The invention will now be described more fully hereinafter with reference to the accompanying figures.

Fig. 1 is a plan view of a rack embodying the invention.

Fig. 2 is a sectional view taken on the line II—II in Fig. 1.

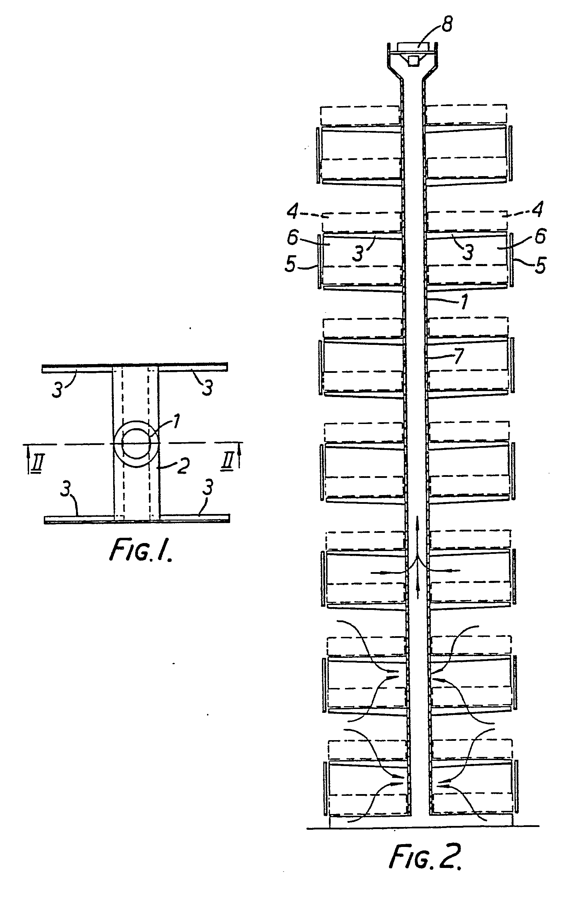

The rack·shown in Fig. 1 comprises a central upright 1 to which are fastened at equal intervals transverse beams 2 extending one above the other on both sides of the upright 1. To the ends of the transverse beams 2 are fastened horizontal members 3 formed by angle-section iron elongate beams so that these girders can support two trays 4, one on each side of the supporting upright 2. In the embodiment shown the rack formed by the upright 1 with the girders 3 connected herewith supports in total 28 trays, 14 of which are arranged one above the other on each side of the upright 1. It will be obvious that as an alternative the rack may be designed to support more or fewer superjacent trays. In a given cultivation room a plurality of such racks can be established.

Fig. 2 shows furthermore that every space between two superjacent trays is closed near the free ends of the girders 3 with the aid of releasable partitions 5. These spaces may also be closed on the sides at the level of the girders 3 with the aid of partitions 6. However, if a plurality of racks are arranged in a row side by side, these spaces may, as an alternative, be screened on the sides only near the ends of the row with the aid of partitions 6 or walls covering the whole side of the row.

It will furthermore be apparent from Fig. 2 that holes 7 are provided at equal intervals in the wall of the hollow upright 1 so that the holes 7 are located at the level of the spaces between consecutive trays 4 closed by means of the partitions 5 and 6. Fig. 2 schematically shows that a blower 8 is arranged at the top end of the hollow upright 1.

The trays 4 containing the cultures have perforated bottoms.

By actuating the blower subatmospheric pressure may be produced in the interior of the upright 1 and hence in the screened spaces between the superjacent beds or trays 4 as a result of which an air stream is passed across the cultures in the trays 4 as indicated by the arrows in Fig. 2. Such a stream across the culture is very advantageous, for example in growing mushrooms. During a first stage of the growth a fairly high amount of $CO_2$ is produced, which gas tends to stay in a thin layer in and on the material contained in the trays 4. In a further stage this gas has to be removed in order to obtain an effective fructuation. By producing subatmospheric pressure in the manner described above this $CO_2$ will be directly sucked away from its location without the need for flushing the whole space of cultivation beds by an excess quantity of air, as has been required to do so far. In practice it has been found that by this local suction of the $CO_2$ a very satisfactory removal of $Co_2$, which is quite uniform throughout the surface of the bed so that the subsequent fructuation of the mushrooms will be uniform to the whole bed surface.

If desired, the system described above and shown in the figures may also be used to produce excess pressure in the closed spaces between the superjacent trays by supplying pressurized air or another, desirable gas so that the material in the trays 4 will be effectively traversed by the air or the gas concerned.

As a matter of course, within the scope of the invention modifications and/or additions of the foregoing are possible. For example, in the embodiment shown a blower is provided at the end of the upright 1, but it will be obvious that other means for producing subatmospheric or excess pressure may be connected with the upright 1, which means may also be connected with any further uprights.

The construction embodying the invention also permits of producing subatmospheric pressure or of aerating cultivation beds supported by a rack in a room independently of cultivation beds supported by a further rack. The figures used in the claims are only meant to explain more clearly the intention of the invention and are not supposed to be any restriction concerning the interpretation of the invention.

**Claims**

1. A method of cultivating crops in air pervious beds comprising arranging culture material in air pervious beds one above the other and screening the space between two superjacent beds characterised by passing air or other gas through the material and bases of the beds from or to the ambient atmosphere into or out of the said space by subjecting said space to a sub- or superatmospheric pressure.

2. A method as claimed in claim 1, characterized in that a subatmospheric pressure is produced in said space by sucking air out of said space.

3. A cultivation room for carrying out the method of claim 1 or 2, provided with racks for supporting cultivation beds, the racks comprising horizontal members (3) supported by hollow uprights (1) having orifices (7) opening into spaces between superjacent horizontal members, the spaces being screened by partitions (5, 6), and wherein the hollow uprights (1) are connected to means (8) for producing sub- or superatmospheric pressure in said spaces characterised in that the horizontal members are in form of elongate beams (13) on which, in use the cultivation beds directly rest so that air or other gas can pass through the cultivation material and base of the cultivation beds from or to the ambient atmosphere into or out of the said space under the influence of the pressure means (8).

4. A cultivation room as claimed in claim 3, characterised in that a rack is provided with a single, central upright (1), to which the elongate beams for supporting cultivation beds are fastened with the aid of transverse beams (2) in such a way that the cultivation beds are located on both sides of the upright (1).

5. A cultivation room as claimed in claim 3 or 4, characterised in that the rack is provided with replaceable partitions (5, 6), with the aid of which every space between two superjacent beds is at least partly screened.

**Patentansprüche**

1. Zuchtverfahren für Gewächse in luftdurchlässigen Beeten umfassend die Anordnung von Kulturmaterial in übereinander liegenden, luftdurchlässigen Beeten und die Abschirmung des Zwischenraumes zwischen zwei übereinanderliegenden Beeten, dadurch gekennzeichnet, daß Luft oder ein anderes Gas durch das Kulturmaterial und den Boden der Beete von oder zur Umgebungsatmosphäre in den oder aus dem erwähnten Zwischenraum hindurchgefürht wird, indem der erwähnte Zwischenraum einem unter- oder überatmosphärischen Druck unterworfen wird.

2. Zuchtverfahren nach Anspruch 1, dadurch gekennzeichnet, daß ein unteratmosphärischer Druck im Zwischenraum durch Absaugen von Luft aus diesem Zwischenraum erzeugt wird.

3. Zuchtraum zur Ausübung des Verfahrens nach Anspruch 1 oder 2 mit Gestellen zur Aufnahme der Zuchtbeete, wobei die Gestelle horizontale Glieder (3) umfassen, welche von hohlen Säulen (1) getragen sind, die Öffnungen (7) besitzen, welche in den Zwischenräume (6) zwischen übereinanderliegenden horizontalen Glieder mün -den und die Zwischenräume durch Trennwände (5, 6) abgeschirmt sind und die hohlen Säulen (1) mit Mitteln (8) zur Erzeugung eines unter- oder überatmosphärischen Druckes in den

# 0 067 492

Zwischenräumen (6) verbunden sind, dadurch gekennzeichnet, daß die horizontalen Glieder als langgestreckte Holme (3) ausgebildet sind, auf welchen bei bestimmungsgemäßem Einsatz die Beete unmittelbar aufliegen, so daß Luft oder ein anderes Gas durch das Kulturmaterial und den Boden des Beetes aus oder zu der Umgebungsatmosphäre in den oder aus dem genannten Zwischenraum strömen kann und zwar unter dem Einfluß der druckerzeugenden Mittel (8).

4. Zuchtraum nach Anspruch 3, dadurch gekennzeichnet, daß ein Gestell mit einer einzigen zentralen Säule (1) ausgestattet ist, an welcher die lnaggestreckten Holme (3) zur Aufnahme der Beete mittels Quertraversen (2) so befestigt sind, daß die Beete auf beiden Seiten der Säule (1) liegen.

5. Zuchtraum nach Anspruch 3 oder 4, dadurch gekennzeichnet, daß das Gestell lösbare Trennwände (5, 6) aufweist, mittels welchen jeder Zwischenraum (6) zwischen zwei übereinanderliegenden Beeten mindestens teilweise abschirmbar ist.

**Revendications**

1. Procédé de culture de végétaux sur des lits perméables à l'air, consistant à déposer un matériau de culture selon des lits perméables à l'air disposés les uns au-dessus des autres et à protéger l'espace entre deux lits superposés, caractérisé en ce qu'on fait passer l'air ou un autre gaz à travers le matériau et les bases des lits à partir de l'atmosphère ambiante à l'intérieur dudit espace ou en direction de l'atmosphère ambiante à partir dudit espace, en plaçant ce dernier à une pression inférieure ou supérieure à la pression atmosphérique.

2. Procédé selon la revendication 1, caractérisé en ce que l'on établit une pression inférieure à la pression atmosphérique dans ledit espace en aspirant l'air hors de ce dernier.

3. Salle de culture pour la mise en oeuvre du procédé selon la revendication 1 ou 2, comportant des rayonnages servant à supporter des lits de culture et comportant des éléments horizontaux (3) soutenus par des montants verticaux creux (1) possédant des orifices (7) débouchant dans des espaces (6) situés entre des éléments horizontaux superposés, ces espaces étant protégés par des cloisons (5, 6), et dans laquelle les montants verticaux creux (1) sont raccordés à des moyens (8) servant à établir une pression supérieure ou inférieure à la pression atmosphérique dans lesdits espaces (6), caractérisé en ce que les éléments horizontaux sont réalisés sous la forme de barres allongées (13) sur lesquelles, en cours d'utilisation, les lits de culture reposent directement de sorte que l'air ou un autre gaz peut traverser le matériau de culture et la base des lits de culture depuis l'atmosphère ambiante dans ledit espace ou en direction de l'atmosphère ambiante à partir dudit espace, sous l'influence des moyens (8) d'établissement de la pression.

4. Salle de culture selon la revendication 3, caractérisée en ce qu'un rayonnage est muni d'un montant vertical central unique (1) auquel les éléments allongés servant à supporter les lits de culture sont fixés à l'aide de barres transversales (2) de telle sorte que les lits de culture sont situés des deux côtés du montant (1).

5. Salle de culture selon la revendication 3, ou 4, caractérisée en ce que le rayonnage est muni de cloisons détachables (5, 6) à l'aide desquelles chaque espace (6) situé entre deux lits de culture superposés est au moins partiellement protégé.

FIG.1.

FIG.2.